# EUROPEAN PATENT APPLICATION

(11) **EP 4 611 338 A1**
(43) Date of publication of application: **03.09.2025**
(21) Application number: 24210261.4
(22) Date of filing: 31.10.2024
(51) Int. Cl.: H04L 43/50, H04W 24/02

(54) **NETWORK DEVICE TESTING WITH VIRTUAL CLIENT FUNCTIONS**

(30) Priority: 28.02.2024 US 202418590136
(71) Applicant: Juniper Networks, Inc., Sunnyvale, CA 94089-1206 (US)
(72) Inventor: FREI, Randall, Sunnyvale, 94089 (US)
(74) Representative: D Young & Co LLP

(57) **Abstract**

Network device testing with virtual client functions. The disclosure describes one or more techniques for performing roaming tests for sites. For example, a device comprises a memory and one or more processors in communication with the memory and configured to obtain instructions that cause a device of a site to operate as a synthetic client device and to simulate a roaming instance; and send data associated with the roaming instance to a network management system, wherein the data is indicative of a performance of the roaming instance.

## Description

This application claims the benefit of US Patent Application No. 18/590,136, filed 28 February 2024, the entire contents of which is incorporated herein by reference.

### TECHNICAL FIELD

The disclosure relates generally to computer networks and, more specifically, to monitoring and troubleshooting computer networks.

### BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee or other wireless networking technologies. Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point in order to access a wired network.

### SUMMARY

Particular aspects are set out in the appended independent claims. Various optional embodiments are set out in the dependent claims. In general, this disclosure describes virtual client functions that execute on devices at sites to perform tests, such as roaming tests. For example, as client devices move through a site, client devices may switch or "roam" from one access point (AP) to a different AP that is in range of the client device to provide seamless network connectivity throughout the site, such as in accordance with fast roaming described in IEEE 802.1 1r. Fast roaming provides an expedited roaming process in networks that implement security protocols, such as Wi-Fi Protected Access (WPA), by eliminating the need for client devices to re-authenticate through an Authentication, Authorization, and Accounting (AAA) server when roaming from one AP to another. For example, a network device obtains cryptographic information for an initial association with a first AP and provides the cryptographic information to a different AP such that a second AP may determine that the client device has been previously authenticated and re-associates with the second AP, thus eliminating the need to perform the authentication process (e.g., cryptographic key exchange, etc.) to connect to the network. In accordance with the techniques of the disclosure, one or more devices (e.g., client devices, APs or other network devices) may execute virtual client functions (e.g., executable program instructions) that may cause the devices to simulate a roaming instance and determine whether the roaming instance is functioning properly.

As one example, a network management system (NMS) configured to manage one or more wireless networks of a site may orchestrate virtual client functions to be executed by one or more devices, such as APs, to simulate a roaming instance. The virtual client functions may include information associated with the roaming instance, such as an identifier of a synthetic client device (e.g., MAC address), cryptographic information (e.g., keys, pairwise master key identifier (PMKID), etc.), a schedule to invoke the roaming instance, and/or other information to simulate the roaming instance (collectively referred to herein as "roaming information").

The APs may execute the virtual client functions that cause the APs to operate as the client device (referred to herein as "synthetic client device" or "synthetic station") and simulate a roaming instance in which the synthetic client device roams from an initial AP to a different AP. The APs of the roaming instance may monitor the performance of the roaming instance, such as providing assurance of or detecting an issue with the roaming instance (e.g., determining whether there is an issue in sharing the cryptographic information, issue with data properly communicating after roaming, etc.).

The NMS may obtain data associated with the performance of the roaming instance (referred to herein as "roaming data") and perform an action based on the roaming data, such as generating and sending a notification to an administrator of the site indicating the performance of the roaming instance and/or performing a remedial action to mitigate or resolve the detected issues with the roaming instance.

The techniques of this disclosure provide one or more technical advantages and practical applications. For example, by providing virtual client functions executed by devices to simulate a roaming instance, roaming issues are detected proactively (e.g., before a user experiences a roaming issue). Moreover, the techniques of the disclosure provide roaming tests without needing a physical presence at the site to perform roaming tests, which enables roaming tests to be performed during periods of low or no client device usage to avoid disruptions to the network during periods of high client device usage.

In one example, the disclosure describes a device comprising a memory and one or more processors in communication with the memory and configured to obtain instructions that cause the device to operate as a synthetic client device and to simulate a roaming instance. The instructions may further cause the one or more processors of the device to send data associated with the roaming instance to a network management system, wherein the data is indicative of a performance of the roaming instance.

In another example, the disclosure describes a network management system comprising a memory and one or more processors in communication with the memory and configured to send instructions that cause a device of a site to operate as a synthetic client device and to simulate a roaming instance. The instructions may further cause the one or more processors of the network management system to obtain data associated with the roaming instance. The instructions may also cause the one or more processors of the network management system to determine, based on the data associated with the roaming instance, a performance of the roaming instance.

In another example, the disclosure describes a non-transitory or transitory computer-readable media comprising instructions that, when executed, cause one or more processors to obtain instructions that cause a device of a site to operate as a synthetic client device and to simulate a roaming instance. The computer-readable media may further comprise instructions that, when executed, cause one or more processors to send data associated with the roaming instance to a network management system, wherein the data is indicative of a performance of the roaming instance.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system configured to perform roaming tests for sites, in accordance with one or more techniques of the disclosure.
FIG. 1B is a block diagram illustrating further example details of the network system of FIG. 1A.
FIG. 2 is a block diagram of an example access point device, in accordance with one or more techniques of this disclosure.
FIG. 3 is a block diagram of an example network management system, in accordance with one or more techniques of the disclosure.
FIG. 4 is a block diagram of an example user equipment device, in accordance with one or more techniques of this disclosure.
FIG. 5 is a block diagram of an example network node, such as a router or switch, in accordance with one or more techniques of this disclosure.
FIG. 6A illustrates an example operation of a roaming test, in accordance with one or more techniques of this disclosure.
FIG. 6B illustrates another example operation of a roaming test, in accordance with one or more techniques of this disclosure.
FIG. 7 is a flow chart illustrating an example orchestration and operation of a roaming test, in accordance with one or more techniques of this disclosure.

### DETAILED DESCRIPTION

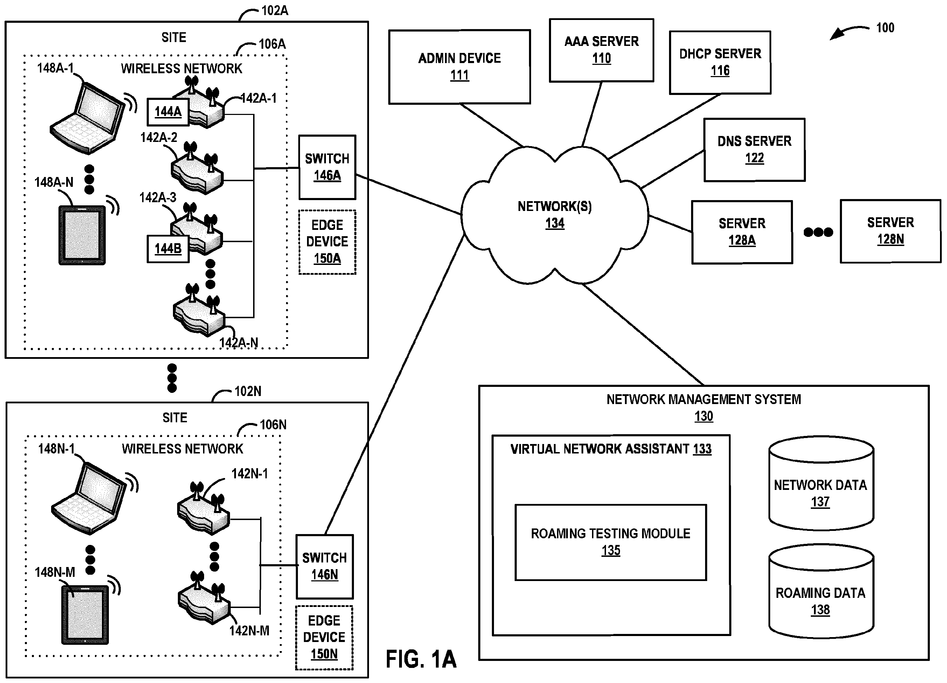

FIG. 1A is a block diagram of an example network system 100 configured to perform roaming tests for sites, in accordance with one or more techniques of this disclosure. Example network system 100 includes a plurality sites 102A-102N at which a network service provider manages one or more wireless networks 106A-106N, respectively. Although in FIG. 1A each site 102A-102N is shown as including a single wireless network 106A-106N, respectively, in some examples, each site 102A-102N may include multiple wireless networks, and the disclosure is not limited in this respect.

Each site 102A-102N includes a plurality of network access server (NAS) devices, such as access points (APs) 142, switches 146, or routers (not shown). For example, site 102A includes a plurality of APs 142A-1 through 142A-N. Similarly, site 102N includes a plurality of APs 142N-1 through 142N-M. Each AP 142 may be any type of wireless access point, including, but not limited to, a commercial or enterprise AP, a router, or any other device that is connected to a wired network and is capable of providing wireless network access to client devices within the site. References to "N" or "M" may represent any number. References to "N" for different elements need not be the same number. Similarly, references to "M" for different elements need not be the same number.

Each site 102A-102N also includes a plurality of client devices, otherwise known as user equipment devices (UEs), referred to generally as UEs or client devices 148, representing various wireless-enabled devices within each site. For example, a plurality of UEs 148A-1 through 148A-N are currently located at site 102A. Similarly, a plurality of UEs 148N-1 through 148N-M are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1A, site 102A includes a switch 146A to which each of APs 142A-1 through 142A-N at site 102A are connected. Similarly, site 102N includes a switch 146N to which each of APs 142N-1 through 142N-M at site 102N are connected. Although illustrated in FIG. 1A as if each site 102 includes a single switch 146 and all APs 142 of the given site 102 are connected to the single switch 146, in other examples, each site 102 may include more or fewer switches and/or routers. In addition, the APs and the other wired client-side devices of the given site may be connected to two or more switches and/or routers. In addition, two or more switches at a site may be connected to each other and/or connected to two or more routers, e.g., via a mesh or partial mesh topology in a hub-and-spoke architecture. In some examples, interconnected switches and routers comprise wired local area networks (LANs) at sites 102 hosting wireless networks 106.

Example network system 100 also includes various networking components for providing networking services within the wired network including, as examples, an Authentication, Authorization, and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128N (collectively "servers 128") (e.g., web servers, databases servers, file servers and the like), and a network management system (NMS) 130. As shown in FIG. 1A, the various devices and systems of network 100 are coupled together via one or more network(s) 134, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / SMS messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

The administrator and admin device 111 may comprise IT personnel and an administrator computing device associated with one or more of sites 102. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of the NAS devices, e.g., APs 142, switches 146, or routers, may connect to edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices while using NMS 130 and its distributed software architecture for scalable and resilient operations, management, troubleshooting, and analytics.

Each one of the network devices of network system 100, e.g., servers 110, 116, 122 and/or 128, APs 142, UEs 148, switches 146, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 110, 116, 122 and/or 128, APs 142, UEs 148, and switches 146, may be considered "third-party" network devices when owned by and/or associated with a different entity than NMS 130 such that NMS 130 does not receive, collect, or otherwise have access to the recorded status and other data of the third-party network devices. In some examples, edge devices 150 may provide a proxy through which the recorded status and other data of the third-party network devices may be reported to NMS 130.

In some examples, NMS 130 monitors network data 137, e.g., one or more service level expectation (SLE) metrics, received from wireless networks 106A-106N at each site 102A-102N, respectively, and manages network resources, such as APs 142 at each site, to deliver a high-quality wireless experience to end users, IoT devices and clients at the site. For example, NMS 130 may include a virtual network assistant (VNA) 133 that implements an event processing platform for providing real-time insights and simplified troubleshooting for IT operations, and that automatically takes corrective action or provides recommendations to proactively address wireless network issues. VNA 133 may, for example, include an event processing platform configured to process hundreds or thousands of concurrent streams of network data 137 from sensors and/or agents associated with APs 142 and/or nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause of error conditions detected or predicted from the streams of network data 137. If the root cause may be automatically resolved, VNA 133 may invoke one or more corrective actions to correct the root cause of the error condition, thus automatically improving the underlying SLE metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

In operation, NMS 130 observes, collects and/or receives network data 137, which may take the form of data extracted from messages, counters, and statistics, for example. In accordance with one specific implementation, a computing device is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 133 may be part of the NMS 130, may execute on other servers or execution environments, or may be distributed to nodes within network 134 (e.g., routers, switches, controllers, gateways, and the like).

Client devices 148 are authenticated and associated when initially connecting to APs 142. For example, when client device 148A-1 initiates a connection to AP 142A-1, client device 148A-1 may send a connection request to AP 142A-1, which in turn exchange messages with AAA server 110 to authenticate client device 148A-1, and obtains cryptographic information (e.g., keys, PMKID, etc.) to secure communications. Client device 148A-1 may then associate with AP 142A-1 to access one or more networks 134.

Network devices of network system 100, such as APs 142, may provide roaming services. For example, as client device 148A-1 moves through site 102A, client device 148A-1 may switch or "roam" from one AP (e.g., AP 142A-1) to another AP (e.g., AP 142A-N) that is in range of client device 148A-1, e.g., by "disassociating" from AP 142A-1 and "re-associating" with AP 142A-N, to provide seamless network connectivity throughout site 102A. In some examples, APs 142 may provide roaming services, such as fast roaming in accordance with IEEE 802.11r. Fast roaming provides an expedited roaming process in networks that implement security protocols, such as Wi-Fi Protected Access (WPA), by eliminating the need for client devices to re-authenticate when roaming from one AP (e.g., AP 142A-1) to another AP (e.g., AP 142A-N). For example, cryptographic information (e.g., keys) from the original authentication of the initial connection to AP 142A-1 are provided to AP 142A-N such that when client device 148A-1 roams to AP 142A-N, AP 142A-N may determine that client device 148A-1 has been previously authenticated, thus eliminating the need to perform the authentication process (e.g., cryptographic key exchange, etc.).

In accordance with one or more techniques of this disclosure, NMS 130 is configured to perform scheduling and/or orchestration of roaming tests performed by devices of a site. In this example, VNA 133 of NMS 130 includes roaming testing module 135 that is configured to provide information to one or more devices, such as APs 142, to enable APs 142 to simulate a roaming instance and to detect issues of the roaming instance. For example, NMS 130 may provide virtual client functions 144A-144B (collectively referred to herein as "virtual client functions 144") to AP 142A-1 and AP 142A-3, respectively, to cause AP 142A-1 and AP 142A-3 to operate as a client device (referred to herein as "synthetic client device" or "synthetic station") that roams from an initial AP, e.g., AP 142A-2, to a different AP, e.g., AP 142A-N. Virtual client functions 144 may comprise program instructions that may be locally executed by APs 142. NMS 130 may push virtual client functions 144 to AP 142A-1 and AP 142A-3, or AP 142A-1 and AP 142A-3 may pull virtual client functions 144 from NMS 130. In the example of FIG. 1A, AP 142A-1 may execute virtual client function 144A that causes AP 142A-1 to operate as the synthetic client device that establishes an initial connection with AP 142A-2 to simulate an initial authentication and association with AP 142A-2 before roaming. AP 142A-3 may execute virtual client function 144B that causes AP 142A-3 to operate as the synthetic client device that is roaming to AP 142A-N by establishing a new connection with AP 142A-N to simulate a re-association with AP 142A-N. While the example described above is described with respect to two APs operating as a single synthetic client device at two different instances of the roaming instance, the techniques described herein may apply to examples in which a single AP operating as a single synthetic client device, such as AP 142A-1, that roams from AP 142A-2 to AP 142A-N. Moreover, the virtual client function need not be executed by an access point but may be executed by any device such as a client device, a network device, or other computing device to simulate a roaming instance. Additionally, APs 142 need not obtain virtual client functions from NMS 130 and may instead be pre-installed on APs 142.

Virtual client functions 144 may include information associated with the roaming instance, such as an identifier of the synthetic client device, a schedule to invoke the roaming instance, and/or other information to simulate the roaming instance (collectively referred to herein as "roaming information"). The synthetic client device identifier may include, for example, a MAC address of the synthetic client device or any other identifying information of the synthetic client device. The schedule to invoke the roaming instance may include information to coordinate when APs 142 of the roaming instance are to perform particular functions to simulate the roaming instance. For example, virtual client function 144A may include a schedule for AP 142A-1, operating as the synthetic client device at a first time of the roaming instance, to initiate a connection to AP 142A-2 to simulate an initial authentication and association with AP 142A-2, and virtual client function 144B may include a schedule for AP 142A-3, operating as the synthetic client device at a second time of the roaming instance, to initiate a connection to AP 142A-N to simulate re-association with AP 142A-N.

In the example of FIG. 1A, AP 142A-1 may execute virtual client function 144A that causes AP 142A-1 to operate as the synthetic client device at the first time of the roaming instance and initiates a connection to AP 142A-2. AP 142A-2 may authenticate the synthetic client device via AAA server 110 and obtain cryptographic information (e.g., public keys, PMKID, etc.) for the initial connection to AP 142A-2. In some examples, virtual client function 144A may include the cryptographic information for the initial connection to AP 142A-2 that would otherwise be obtained via AAA server 110.

AP 142A-1 or AP 142A-2 may send the cryptographic information to AP 142A-3 and/or AP 142A-N (or to a plurality of other APs 142 via multicast) and/or may send the cryptographic information to NMS 130, which in turn sends the cryptographic information to AP 142A-3 and/or AP 142A-N. AP 142A-3 may execute virtual client function 144B that causes AP 142A-3 to operate as the synthetic client device at the second time of the roaming instance and initiates a connection to AP 142A-N, which in turn may determine whether the synthetic client device is previously authenticated based on the cryptographic information obtained from AP 142A-1 or AP 142A-2 (or from NMS 130).

APs of the roaming instance (e.g., AP 142A-1, AP 142A-2, AP 142A-3, and AP 142A-N) may collect data associated with the performance of the roaming instance, referred to herein as roaming data. Based on the roaming data, APs of the roaming instance, and/or NMS 130 in some instances, may determine the performance of the roaming instance, such as providing assurance of or determining whether there is an issue with authentication, authorization, and/or accounting of the user and/or UEs 148, obtaining or sharing cryptographic information, configuration of devices of the roaming instance, network connectivity of devices of the roaming instance, communication of network traffic following a re-association to a different AP, and/or any other issue in performing the roaming instance.

In some examples, APs of the roaming instance may determine whether there is a VLAN configuration issue that is resulting from an issue in sharing the cryptographic information. Additionally, or alternatively, APs of the roaming instance may determine whether there are any configuration issues of the APs of the roaming instance that is causing an issue in sharing the cryptographic information, such as determining whether 802.11r for fast roaming is not enabled for one or more APs of the roaming instance, whether multicast is not enabled for one or more APs of the roaming instance in examples where APs use multicast to share cryptographic information, and/or whether other configuration issues of the APs are causing an issue in sharing the cryptographic information.

In some examples, APs of the roaming instance may determine whether there is a network connectivity issue to management systems, such as determining whether there is an issue with the connectivity to NMS 130 in examples where APs of the roaming instance may send cryptographic information to NMS 130 to be distributed to other APs. In some examples, APs of the roaming instance may determine an issue with AAA server 110 that is causing an issue in obtaining the cryptographic information, such as obtaining incorrect and/or outdated cryptographic information. Additionally, or alternatively, APs of the roaming instance may determine that the roaming instance is not completed within a predefined time, which may be indicative of a capacity issue of an AP, signal interference, or other reason that is causing an issue in the performance of the roaming instance.

In some examples, APs of the roaming instance may monitor the performance of data communicated through the network following the re-association to a different AP. In these examples, a client device may successfully re-associate with a different AP but there may be an issue with the communication of network traffic. In these examples, AP 142A-3 operating as the synthetic client device that is re-associated with AP 142A-N may inject packets into the network via AP 142A-N and monitor the performance of the communication of network traffic. For example, AP 142A-3 may execute a ping or client URL (cURL) command to determine the connectivity to an IP address and/or webpage.

NMS 130 may obtain the roaming data of APs (illustrated in FIG. 1A as "roaming data 138") and perform an action based on the roaming data. In some examples, NMS 130 may further perform roaming quality assessments based on the network data 137 and/or roaming results data 138. Additional examples of an NMS performing roaming quality assessments are described in U.S. Patent Application No. 17/931,708, filed September 13, 2022, the entire contents of which is incorporated by reference herein. In some examples, NMS 130 may generate and send a notification (e.g., for display on a display device of admin device 111) or as a message to an administrator that includes an indication of the performance of the roaming instance (e.g., roaming succeeded or failed) and/or an indication of root cause of the roaming instance, such as an issue with the configuration of the network, configuration of the APs, or other issue that caused an issue to the roaming instance. In some examples, NMS 130 may perform a remedial action to mitigate or resolve issues of the roaming instance, such as configuring operation of one or more APs of the roaming instance to address the roaming issue or restarting one or more APs of the roaming instance.

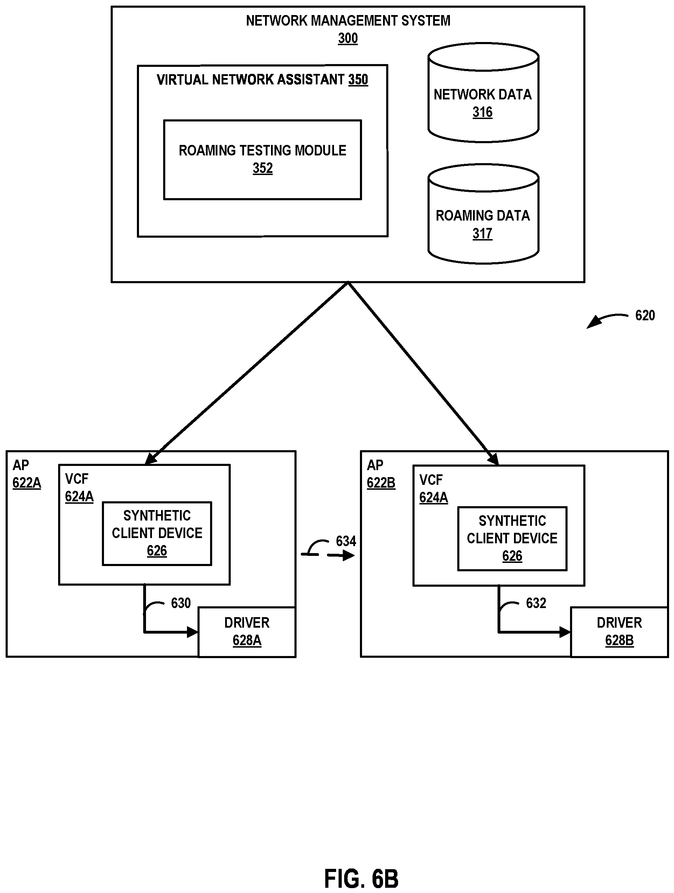

In some examples, and as further described below in FIG. 6B, rather than AP 142A-1 operating as the synthetic client device and sending messages over the wireless network to associate with a wireless next hop, e.g., AP 142A-2 (and similarly AP 142A-3 operating as the synthetic client device sending messages over the wireless network to re-associate with AP 142A-N) to simulate the roaming instance, the virtual client function 144A of AP 142A-1 may operate as a synthetic client device that injects messages locally within AP 142A-1 to a local Wi-Fi driver (e.g., software of wireless interface) of AP 142A-1 to simulate the authentication and association of the synthetic client device to AP 142A-1. AP 142A-1 may then obtain the cryptographic information (e.g., public keys, PMKID, etc.) for the synthetic client device by performing an authentication process of the synthetic client device with AAA server 110 and send the cryptographic information to AP 142A-3.

AP 142A-3 may execute virtual client function 144B and operate as the synthetic client device that injects messages locally within AP 142A-3 to a local Wi-Fi driver of AP 142A-3 to simulate the re-association of the synthetic client device to AP 142A-N based on the cryptographic information obtained from AP 142A-1 (or from NMS 130). In this way, by implementing virtual client functions that inject packets locally within an AP that is operating as a synthetic client device and an AP to which the synthetic client device is associating with, fewer devices are needed to simulate the roaming instance.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

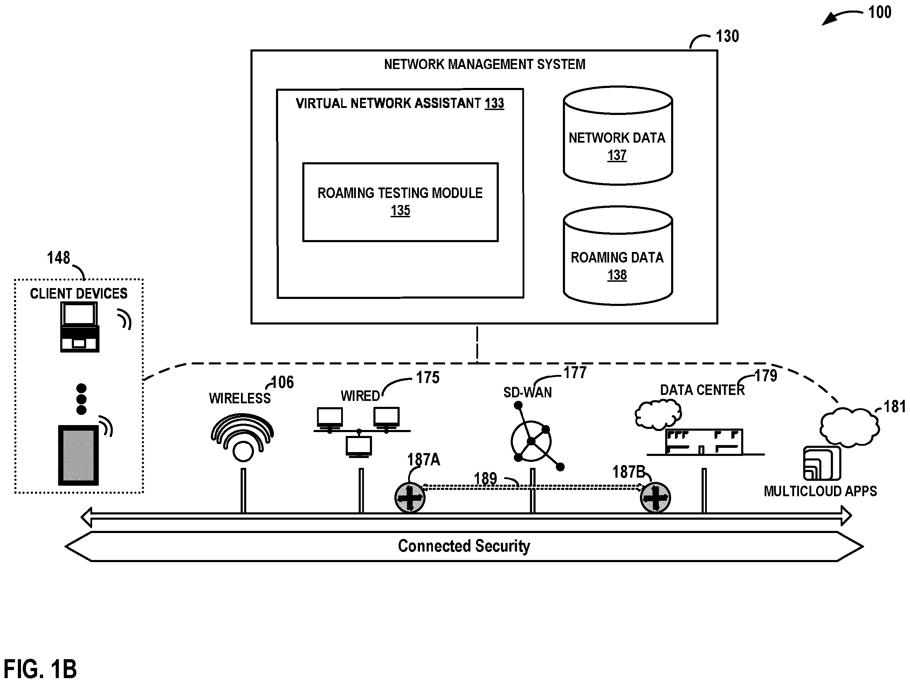

FIG. 1B is a block diagram illustrating further example details of the network system of FIG. 1A. In this example, FIG. 1B illustrates NMS 130 configured to operate according to an artificial intelligence / machine-learning-based computing platform providing comprehensive automation, insight, and assurance (WiFi Assurance, Wired Assurance and WAN assurance) spanning from "client," e.g., user devices 148 connected to wireless network 106 and wired LAN 175 (far left of FIG. 1B), to "cloud," e.g., cloud-based application services 181 that may be hosted by computing resources within data centers 179 (far right of FIG. 1B).

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 133 includes a natural language processing engine to provide AI-driven support and troubleshooting, anomaly detection, AI-driven location services, and AI-driven radio frequency (RF) optimization with reinforcement learning.

As illustrated in the example of FIG. 1B, AI-driven NMS 130 also provides configuration management, monitoring and automated oversight of software defined wide-area network (SD-WAN) 177, which operates as an intermediate network communicatively coupling wireless networks 106 and wired LANs 175 to data centers 179 and application services 181. In general, SD-WAN 177 provides seamless, secure, traffic-engineered connectivity between "spoke" routers 187A of wired networks 175 hosting wireless networks 106, such as branch or campus networks, to "hub" routers 187B further up the cloud stack toward cloud-based application services 181. SD-WAN 177 often operates and manages an overlay network on an underlying physical Wide-Area Network (WAN), which provides connectivity to geographically separate customer networks. In other words, SD-WAN 177 extends Software-Defined Networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers 187A, 187B dynamically modify contents of original packet headers sourced by client devices 148 to steer traffic along selected paths, e.g., path 189, toward application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

Additional information with respect to session-based routing and SVR is described in U.S. Patent No. 9,729,439, entitled "COMPUTER NETWORK PACKET FLOW CONTROLLER," and issued on August 8, 2017; U.S. Patent No. 9,729,682, entitled "NETWORK DEVICE AND METHOD FOR PROCESSING A SESSION USING A PACKET SIGNATURE," and issued on August 8, 2017; U.S. Patent No. 9,762,485, entitled "NETWORK PACKET FLOW CONTROLLER WITH EXTENDED SESSION MANAGEMENT," and issued on September 12, 2017; U.S. Patent No. 9,871,748, entitled "ROUTER WITH OPTIMIZED STATISTICAL FUNCTIONALITY," and issued on January 16, 2018; U.S. Patent No. 9,985,883, entitled "NAME-BASED ROUTING SYSTEM AND METHOD," and issued on May 29, 2018; U.S. Patent No. 10,200,264, entitled "LINK STATUS MONITORING BASED ON PACKET LOSS DETECTION," and issued on February 5, 2019; U.S. Patent No. 10,277,506, entitled "STATEFUL LOAD BALANCING IN A STATELESS NETWORK," and issued on April 30, 2019; U.S. Patent No. 10,432,522, entitled "NETWORK PACKET FLOW CONTROLLER WITH EXTENDED SESSION MANAGEMENT," and issued on October 1, 2019; and U.S. Patent No. 11,075,824, entitled "IN-LINE PERFORMANCE MONITORING," and issued on July 27, 2021, the entire content of each of which is incorporated herein by reference in its entirety.

In some examples, AI-driven NMS 130 may enable intent-based configuration and management of network system 100, including enabling construction, presentation, and execution of intent-driven workflows for configuring and managing devices associated with wireless networks 106, wired LAN networks 175, and /or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only having a user/system to specify declarative requirements that specify a desired result applicable across various different types of devices, management and configuration of the network devices becomes more efficient. Further example details and techniques of an intent-based network management system are described in U.S. Patent No. 10,756,983, entitled "Intent-based Analytics," and U.S. Patent No. 10,992,543, entitled "Automatically generating an intent-based network model of an existing computer network," each of which is hereby incorporated by reference.

In accordance with the techniques described in this disclosure, NMS 130 is configured to perform automated scheduling and/or orchestration of roaming tests performed by network devices of a site. As described above, roaming testing module 135 is configured to provide information to one or more devices, such as client devices 148, NAS devices in wireless network 106 or wired network 175, and/or network devices in SD-WAN 177, to simulate a roaming instance and to monitor the performance of the roaming instance. For example, roaming testing module 135 may provide a virtual client function to one or more devices of wireless network 106, wired network 175, and/or SD-WAN 177 to cause the one or more devices to operate as a synthetic client device for a roaming instance, and to monitor the performance of the roaming instance, and/or to provide roaming data to NMS 130 to perform an action based on the roaming data, such as generating and sending a notification to an administrator of the site indicating the performance of the roaming instance provided by the APs and/or performing a remedial action to mitigate or resolve issues of the roaming instance.

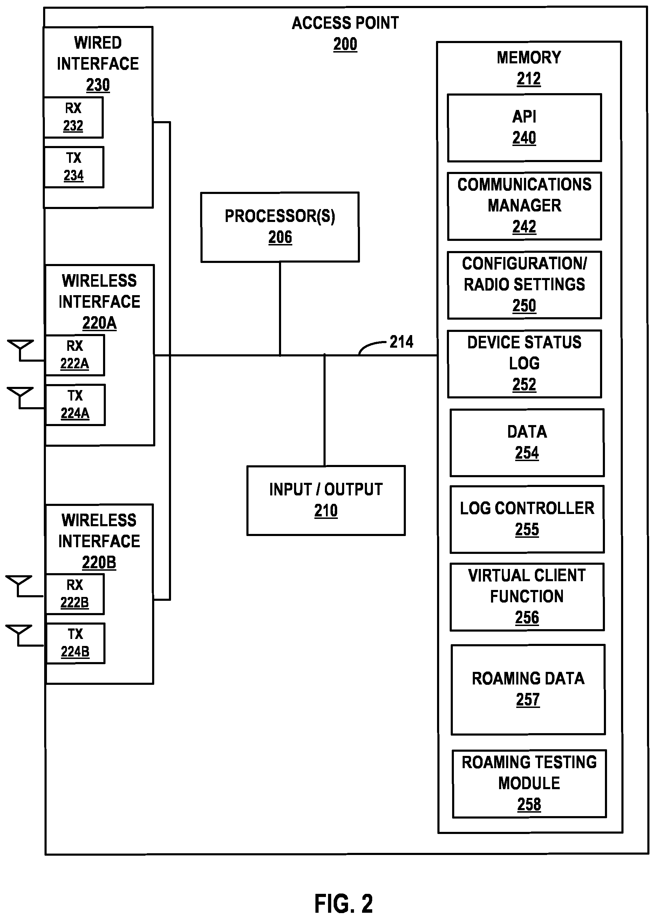

FIG. 2 is a block diagram of an example access point (AP) device 200, in accordance with one or more techniques of this disclosure. Example access point 200 shown in FIG. 2 may be used to implement any of APs 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B one or more processor(s) 206, memory 212, and input/output 210, coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, access point 200 to a wired network device, such as one of switches 146 of FIG. 1A, within the wired network via a cable, such as an Ethernet cable.

First and second wireless interfaces 220A and 220B represent wireless network interfaces and include receivers 222A and 222B, respectively, each including a receive antenna via which access point 200 may receive wireless signals from wireless communications devices, such as UEs 148 of FIG. 1A. First and second wireless interfaces 220A and 220B further include transmitters 224A and 224B, respectively, each including transmit antennas via which access point 200 may transmit wireless signals to wireless communications devices, such as UEs 148 of FIG. 1A. In some examples, first wireless interface 220A may include a Wi-Fi 802.11 interface (e.g., 2.4 GHz and/or 5 GHz) and second wireless interface 220B may include a Bluetooth interface and/or a Bluetooth Low Energy (BLE) interface.

Processor(s) 206 are programmable hardware-based processors configured to execute software instructions, such as those used to define a software or computer program, stored to a computer-readable storage medium (such as memory 212), such as non-transitory computer-readable media including a storage device (e.g., a disk drive, or an optical drive) or a memory (such as Flash memory or RAM) or any other type of volatile or non-volatile memory, that stores instructions to cause the one or more processors 206 to perform the techniques described herein.

Memory 212 includes one or more devices configured to store programming modules and/or data associated with operation of access point 200. For example, memory 212 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 stores executable software including an application programming interface (API) 240, a communications manager 242, configuration settings 250, a device status log 252, data storage 254, and log controller 255. Device status log 252 includes a list of events specific to access point 200. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 255 determines a logging level for the device based on instructions from NMS 130. Data 254 may store any data used and/or generated by access point 200, including data collected from UEs 148, such as data used to calculate one or more SLE metrics, that is transmitted by access point 200 for cloud-based management of wireless networks 106A by NMS 130.

Input/output (I/O) 210 represents physical hardware components that enable interaction with a user, such as buttons, a display, and the like. Although not shown, memory 212 typically stores executable software for controlling a user interface with respect to input received via I/O 210. Communications manager 242 includes program code that, when executed by processor(s) 206, allow access point 200 to communicate with UEs 148 and/or network(s) 134 via any of interface(s) 230 and/or 220A-220C. Configuration settings 250 include any device settings for access point 200 such as radio settings for each of wireless interface(s) 220A-220C. These settings may be configured manually or may be remotely monitored and managed by NMS 130 to optimize wireless network performance on a periodic (e.g., hourly or daily) basis.

As described herein, AP device 200 may measure and report network data from status log 252 to NMS 130. The network data may comprise event data, telemetry data, and/or other SLE-related data. The network data may include various parameters indicative of the performance and/or status of the wireless network. The parameters may be measured and/or determined by one or more of the UE devices and/or by one or more of the APs in a wireless network. NMS 130 may determine one or more SLE metrics based on the SLE-related data received from the APs in the wireless network and store the SLE metrics as network data 137 (FIG. 1A).

In accordance with the techniques described in this disclosure, AP device 200 includes a virtual client function 256 obtained from a network management system (e.g., NMS 130 of FIG. 1A) that configures AP device 200 to simulate a roaming instance. For example, virtual client function 256 may include information associated with a roaming instance, such as an identifier of a synthetic client device (e.g., MAC address), a schedule to invoke the roaming instance, and/or other information to simulate the roaming instance.

AP device 200 may execute virtual client function 256 that includes program instructions that, when executed by one or more processors 206, cause AP device 200 to simulate the roaming instance. In an example in which virtual client function 256 includes program instructions for a synthetic client device to perform an initial association with an initial AP (e.g., AP 142A-2 of FIG. 1A), the program instructions of virtual client function 256 may configure one or more processors 206 of AP device 200 to initiate a connection to the initial AP via transmitter 224A of first wireless interface 220A, and to obtain cryptographic information (e.g., keys, pairwise master key identifier (PMKID), etc.) from the initial AP via receiver 222A of first wireless interface 220A. The program instructions of virtual client function 256 may also configure one or more processors 206 of AP device 200 to send the cryptographic information to another AP operating as the synthetic client device (e.g., AP 142A-3 of FIG. 1A) via transmitter 224A of first wireless interface 220A, such that the other AP operating as the synthetic client device may perform a re-association with a different AP (e.g., AP 142A-N of FIG. 1A) based on the cryptographic information.

As another example in which virtual client function 256 includes program instructions for a synthetic client device to perform a re-association with a different AP (e.g., AP 142A-3 of FIG. 1A), the program instructions of virtual client function 256 may configure one or more processors 206 of AP device 200 to receive cryptographic information from the AP operating as the synthetic client device that performed an association with the initial AP (e.g., AP 142A-1 of FIG. 1A) via receiver 222A of first wireless interface 220A. The program instructions of virtual client function 256 may further configure one or more processors 206 of AP device 200 to initiate a connection to the different AP based on the cryptographic information and the identifier of the synthetic client device.

AP device 200, operating as the synthetic client device that associates with the initial AP or re-associated with the different AP, may collect data associated with the roaming instance and store the data in memory 212 (illustrated as "roaming data 257"). In some examples, AP device 200 includes roaming testing module 258 configured to identify issues with the roaming instance based on roaming data 257. For example, roaming testing module 258 may determine an issue of the roaming instance, such as an issue with the sharing the cryptographic information to other APs to enable fast roaming, that is caused by, for example, a VLAN configuration issue, configuration issues of the APs, network connectivity issue, issue with AAA server, capacity or interference issues of an AP, etc. In some examples, AP device 200 may inject packets into the network and monitor the performance of the communication of network traffic, such as executing a ping or client URL (cURL) command to determine the connectivity to an IP address and/or webpage.

AP device 200 may send to an NMS (e.g., NMS 130 of FIG. 1A), or the NMS may retrieve from AP device 200, roaming data 257, and the NMS may perform an action based on roaming data 257 obtained from AP device 200 (and/or roaming data from other APs of the roaming instance), such as generating and sending a notification (e.g., for display on a display device of admin device 111 or as a message to an administrator) including an indication of the performance of the roaming instance (e.g., roaming instance succeeded or failed) and/or an indication of a root cause of the roaming issue such as an issue with the configuration of the network, configuration of the APs, or other issue that is causing an issue of the roaming instance, or perform a remedial action to mitigate or resolve issues of the roaming instance, such as configuring operation of AP device 200 or restarting AP device 200 to address the roaming issue.

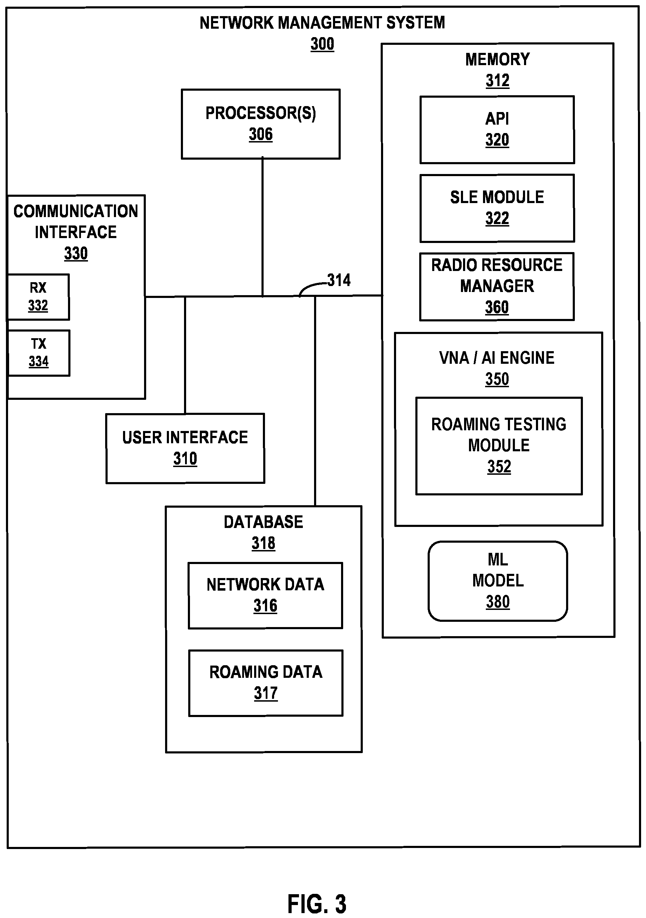

FIG. 3 is a block diagram of an example network management system (NMS) 300, in accordance with one or more techniques of the disclosure. NMS 300 may be used to implement, for example, NMS 130 in FIGS. 1A-1B. In such examples, NMS 300 is responsible for monitoring and management of one or more wireless networks 106A-106N at sites 102A-102N, respectively.

NMS 300 includes a communications interface 330, one or more processor(s) 306, a user interface 310, a memory 312, and a database 318. The various elements are coupled together via a bus 314 over which the various elements may exchange data and information. In some examples, NMS 300 receives data from one or more of client devices 148, APs 142, switches 146 and other network nodes within network 134, e.g., routers 187 of FIG. 1B, which may be used to calculate one or more SLE metrics and/or update network data 316 in database 318. NMS 300 analyzes this data for cloud-based management of wireless networks 106A-106N. In some examples, NMS 300 may be part of another server shown in FIG. 1A or a part of any other server.

Processor(s) 306 execute software instructions, such as those used to define a software or computer program, stored to a computer-readable storage medium (such as memory 312), such as non-transitory computer-readable media including a storage device (e.g., a disk drive, or an optical drive) or a memory (such as Flash memory or RAM) or any other type of volatile or non-volatile memory, that stores instructions to cause the one or more processors 306 to perform the techniques described herein.

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver 332 and a transmitter 334 by which NMS 300 receives/transmits data and information to/from any of client devices 148, APs 142, switches 146, servers 110, 116, 122, 128 and/or any other network nodes, devices, or systems forming part of network system 100 such as shown in FIG. 1A. In some scenarios described herein in which network system 100 includes "third-party" network devices that are owned and/or associated with different entities than NMS 300, NMS 300 does not receive, collect, or otherwise have access to network data from the third-party network devices.

The data and information received by NMS 300 may include, for example, telemetry data, SLE-related data, or event data received from one or more of client device APs 148, APs 142, switches 146, or other network nodes, e.g., routers 187 of FIG. 1B, used by NMS 300 to remotely monitor the performance of wireless networks 106A-106N and application sessions from client device to cloud-based application server. NMS 300 may further transmit data via communications interface 330 to any of network devices such as client devices 148, APs 142, switches 146, other network nodes within network 134, admin device 111 to remotely manage wireless networks 106A-106N and portions of the wired network.

Memory 312 includes one or more devices configured to store programming modules and/or data associated with operation of NMS 300. For example, memory 312 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a virtual network assistant (VNA)/AI engine 350, and a radio resource management (RRM) engine 360. NMS 300 may also include any other programmed modules, software engines and/or interfaces configured for remote monitoring and management of wireless networks 106A-106N and portions of the wired network, including remote monitoring and management of any of APs 142/200, switches 146, or other network devices, e.g., routers 187 of FIG. 1B.

SLE module 322 enables set up and tracking of thresholds for SLE metrics for each network 106A-106N. SLE module 322 further analyzes SLE-related data collected by APs, such as any of APs 142 from UEs in each wireless network 106A-106N. For example, APs 142A-1 through 142A-N collect SLE-related data from UEs 148A-1 through 148A-N currently connected to wireless network 106A. This data is transmitted to NMS 300, which executes by SLE module 322 to determine one or more SLE metrics for each UE 148A-1 through 148A-N currently connected to wireless network 106A. This data, in addition to any network data collected by one or more APs 142A-1 through 142A-N in wireless network 106A, is transmitted to NMS 300 and stored as, for example, network data 316 in database 318.

RRM engine 360 monitors one or more metrics for each site 102A-102N in order to learn and optimize the RF environment at each site. For example, RRM engine 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine may determine channel and transmit power distribution across all APs 142 in each network 106A-106N. For example, RRM engine 360 may monitor events, power, channel, bandwidth, and number of clients connected to each AP. RRM engine 360 may further automatically change or update configurations of one or more APs 142 at a site 102 with an aim to improve the coverage and capacity SLE metrics and thus to provide an improved wireless experience for the user.

VNA/AI engine 350 analyzes data received from network devices as well as its own data to identify when undesired to abnormal states are encountered at one of the network devices. For example, VNA/AI engine 350 may identify the root cause of any undesired or abnormal states, e.g., any poor SLE metric(s) indicative of connected issues at one or more network devices. In addition, VNA/AI engine 350 may automatically invoke one or more corrective actions intended to address the identified root cause(s) of one or more poor SLE metrics. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoking downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel, e.g., a site or network administrator using admin device 111, to address the network error.

In some examples, ML model 380 may comprise a supervised ML model that is trained, using training data comprising pre-collected, labeled network data received from network devices (e.g., client devices, APs, switches and/or other network nodes), to identify a synthetic test time window and/or synthetic test scope. The supervised ML model may comprise one of a logistical regression, naive Bayesian, support vector machine (SVM), or the like. In other examples, ML model 380 may comprise an unsupervised ML model. Although not shown in FIG. 3, in some examples, database 318 may store the training data and VNA/AI engine 350 or a dedicated training module may be configured to train ML model 380 based on the training data to determine appropriate weights across the one or more features of the training data.

In accordance with one or more techniques of this disclosure, VNA 350 includes a roaming testing module 352 configured to schedule and/or orchestrate roaming tests for sites. For example, roaming testing module 352 may generate one or more virtual client functions (e.g., virtual client functions 144 of FIG. 1A) to be executed by one or more devices of a site to simulate a roaming instance. The virtual client functions may include, for example, roaming information for the roaming instance such as an identifier of the synthetic client device (e.g., MAC address), a schedule to invoke the roaming instance (e.g., a timing of when an AP operating as the synthetic client device is to initiate a connection to an initial AP at a first time, and an AP operating as the synthetic client device is to initiate a connection to a different AP at a second time), and/or other information to simulate the roaming instance. In some examples, the roaming information may include cryptographic information for the roaming instance.

In some examples, roaming testing module 352 may determine an optimal testing period to perform roaming tests without disruption to the network at higher usage periods and orchestrate roaming tests to be performed by the one or more devices (e.g., access points) at the site. For example, roaming testing module 352 may determine a "lull period" in which there is minimal or no client activity (e.g., low client device traffic, low number of connected client devices) to perform the roaming test and/or which devices to perform the roaming test. Additional examples of determining when to schedule tests are described in U.S. Application No. 18/394,991, entitled "Synthetic Testing," filed December 22, 2023, the entire contents of which is incorporated by reference herein.

NMS 300 may obtain roaming data associated with the performance of the roaming instance and store the roaming data in database 318. Roaming testing module 352 may perform an action based on the roaming data. In some examples, roaming testing module 352 may generate and send a notification (e.g., for display on a display device of admin device 111 or as a message to an administrator) indicative of the performance of the roaming instance, and/or an indication of a root cause of the roaming issue, such as an issue with the configuration of the network, configuration of the devices, or other issue that is causing the issue of the roaming instance. In some examples, roaming testing module 352 may perform a remedial action to mitigate or resolve issues of the roaming instance, such as configuring operation of one or more devices of the roaming instance to address the roaming issue or restarting one or more devices of the roaming instance.

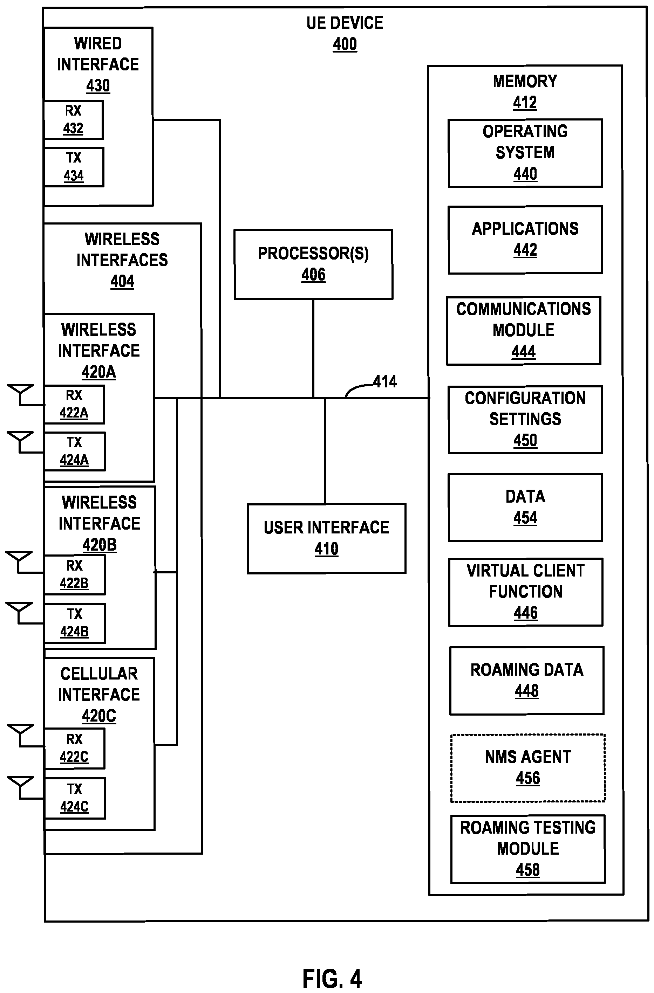

FIG. 4 shows an example user equipment (UE) device 400, in accordance with one or more techniques of this disclosure. Example UE device 400 shown in FIG. 4 may be used to implement any of UEs 148 as shown and described herein with respect to FIG. 1A. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device. In some examples, UE 400 may also include a wired client-side device, e.g., an IoT device such as a printer, a security sensor or device, an environmental sensor, or any other device connected to the wired network and configured to communicate over one or more wireless networks.

UE device 400 includes a wired interface 430, wireless interfaces 420A-420C, one or more processor(s) 406, memory 412, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, UE 400 to a wired network device, such as one of switches 146 of FIG. 1A, within the wired network via a cable, such as one of Ethernet cables 144 of FIG. 1A.

First, second and third wireless interfaces 420A, 420B, and 420C include receivers 422A, 422B, and 422C, respectively, each including a receive antenna via which UE 400 may receive wireless signals from wireless communications devices, such as APs 142 of FIG. 1A, AP 200 of FIG. 2, other UEs 148, or other devices configured for wireless communication. First, second, and third wireless interfaces 420A, 420B, and 420C further include transmitters 424A, 424B, and 424C, respectively, each including transmit antennas via which UE 400 may transmit wireless signals to wireless communications devices, such as APs 142 of FIG. 1A, AP 200 of FIG. 2, other UEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network.

Processor(s) 406 execute software instructions, such as those used to define a software or computer program, stored to a computer-readable storage medium (such as memory 412), such as non-transitory computer-readable media including a storage device (e.g., a disk drive, or an optical drive) or a memory (such as Flash memory or RAM) or any other type of volatile or non-volatile memory, that stores instructions to cause the one or more processors 406 to perform the techniques described herein.

Memory 412 includes one or more devices configured to store programming modules and/or data associated with operation of UE 400. For example, memory 412 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications module 444, configuration settings 450, and data storage 454. Communications module 444 includes program code that, when executed by processor(s) 406, enables UE 400 to communicate using any of wired interface(s) 430, wireless interfaces 420A-420B and/or cellular interface 450C. Configuration settings 450 include any device settings for UE 400 settings for each of wireless interface(s) 420A-420B and/or cellular interface 420C.

Data storage 454 may include, for example, a status/error log including a list of events specific to UE 400. The events may include a log of both normal events and error events according to a logging level based on instructions from NMS 130. Data storage 454 may store any data used and/or generated by UE 400, such as data used to calculate one or more SLE metrics or identify relevant behavior data, that is collected by UE 400 and either transmitted directly to NMS 130 or transmitted to any of APs 142 in a wireless network 106 for further transmission to NMS 130.

As described herein, UE 400 may measure and report network data from data storage 454 to NMS 130. The network data may comprise event data, telemetry data, and/or other SLE-related data. The network data may include various parameters indicative of the performance and/or status of the wireless network. NMS 130 may determine one or more SLE metrics and store the SLE metrics as network data 137 (FIG. 1A) based on the SLE-related data received from the UEs or client devices in the wireless network.

Optionally, UE device 400 may include an NMS agent 456. NMS agent 456 is a software agent of NMS 130 that is installed on UE 400. In some examples, NMS agent 456 can be implemented as a software application running on UE 400. NMS agent 456 collects information including detailed client-device properties from UE 400, including insight into UE 400 roaming behaviors. The information provides insight into client roaming algorithms, because roaming is a client device decision. In some examples, NMS agent 456 may display the client-device properties on UE 400. NMS agent 456 sends the client device properties to NMS 130, via an AP device to which UE 400 is connected. NMS agent 456 can be integrated into a custom application or as part of location application. NMS agent 456 may be configured to recognize device connection types (e.g., cellular or Wi-Fi), along with the corresponding signal strength. For example, NMS agent 456 recognizes access point connections and their corresponding signal strengths. NMS agent 456 can store information specifying the APs recognized by UE 400 as well as their corresponding signal strengths. NMS agent 456 or other element of UE 400 also collects information about which APs the UE 400 connected with, which also indicates which APs the UE 400 did not connect with. NMS agent 456 of UE 400 sends this information to NMS 130 via its connected AP. In this manner, UE 400 sends information about not only the AP that UE 400 connected with, but also information about other APs that UE 400 recognized and did not connect with, and their signal strengths. The AP in turn forwards this information to the NMS, including the information about other APs the UE 400 recognized besides itself. This additional level of granularity enables NMS 130, and ultimately network administrators, to better determine the Wi-Fi experience directly from the client device's perspective.

In some examples, NMS agent 456 further enriches the client device data leveraged in service levels. For example, NMS agent 456 may go beyond basic fingerprinting to provide supplemental details into properties such as device type, manufacturer, and different versions of operating systems. In the detailed client properties, the NMS 130 can display the Radio Hardware and Firmware information of UE 400 received from NMS client agent 456. The more details the NMS agent 456 can draw out, the better the VNA/AI engine gets at advanced device classification. The VNA/AI engine of the NMS 130 continually learns and becomes more accurate in its ability to distinguish between device-specific issues or broad device issues, such as specifically identifying that a particular OS version is affecting certain clients.

In some examples, NMS agent 456 may cause user interface 410 to display a prompt that prompts an end user of UE 400 to enable location permissions before NMS agent 456 is able to report the device's location, client information, and network connection data to the NMS. NMS agent 456 will then start reporting connection data to the NMS along with location data. In this manner, the end user of the client device can control whether the NMS agent 456 is enabled to report client device information to the NMS.

In accordance with the techniques described in this disclosure, UE device 400 includes a virtual client function 446 configured to operate substantially similar to virtual client function 144 of FIG. 1A and virtual client function 256 of FIG. 2 and a roaming testing module 458 configured to operate substantially similar to roaming testing function 135 of FIG. 1A and roaming testing module 258 of FIG. 2. For example, virtual client function 446 includes program instructions that, when executed by one or more processors 406, cause UE device 400 to simulate the roaming instance (e.g., by connecting to APs or other network devices of the network), collect data associated with the performance of a roaming instance (illustrated as "roaming data 448" in memory 412), and/or identify issues with the roaming instance via roaming testing module 458.

UE device 400 may provide, or an NMS (e.g., NMS 130 of FIG. 1A) may obtain, roaming data 448, and the NMS may perform an action based on roaming data 448 obtained from UE device 400 (and/or roaming data from other APs of the roaming instance), such as generating and sending a notification (e.g., for display on a display device of admin device 111 or as a message to an administrator) indicative of the performance of the roaming instance, and/or an indication of a root cause of the roaming issue, such as an issue with the configuration of the network, configuration of the APs or network devices, or other issue that is causing an issue of the roaming instance, or perform a remedial action to mitigate or resolve issues of the roaming instance, such as configuring operation of the APs or network devices or restarting the APs or network devices to address the roaming issue.

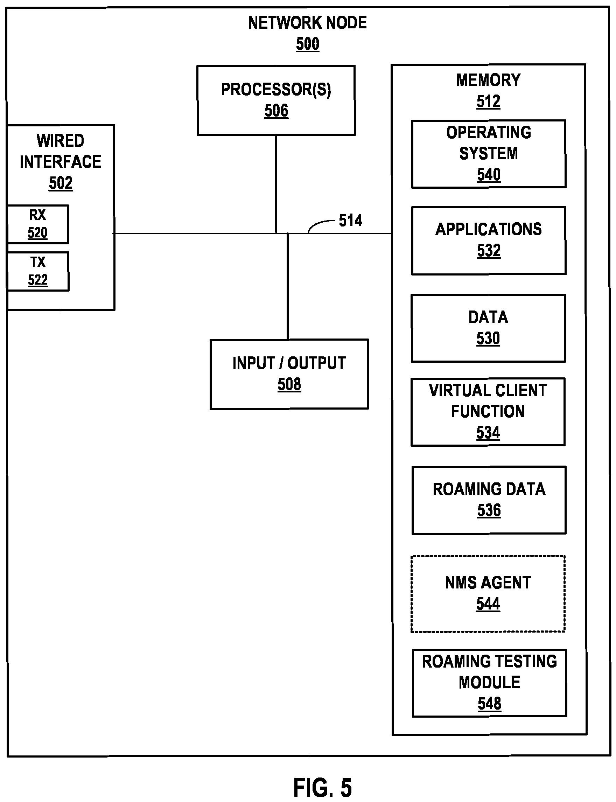

FIG. 5 is a block diagram illustrating an example network node 500, in accordance with one or more techniques of this disclosure. In one or more examples, the network node 500 implements a device or a server attached to the network 134 of FIG.1A, e.g., switches 146, AAA server 110 or other NAC servers or systems, DHCP server 116, DNS server 122, web servers 128, etc., or another network device supporting one or more of wireless network 106, wired LAN 175, or SD-WAN 177, or data center 179 of FIG. 1B, e.g., routers 187.

In this example, network node 500 includes a wired interface 502, e.g., an Ethernet interface, a processor 506, input/output 508, e.g., display, buttons, keyboard, keypad, touch screen, mouse, etc., and a memory 512 coupled together via a bus 514 over which the various elements may interchange data and information. Wired interface 502 couples the network node 500 to a network, such as an enterprise network. Though only one interface is shown by way of example, network nodes may, and usually do, have multiple communication interfaces and/or multiple communication interface ports. Wired interface 502 includes a receiver 520 and a transmitter 522.

Memory 512 stores executable software applications 532, operating system 540 and data/information 530. Data 530 may include a system log and/or an error log that stores event data, including behavior data, for network node 500. In examples where network node 500 comprises a "third-party" network device, the same entity does not own or have access to both the APs or wired client-side devices and network node 500. As such, in the example where network node 500 is a third-party network device, NMS 130 does not receive, collect, or otherwise have access to the network data from network node 500.

In examples where network node 500 comprises a server, network node 500 may receive data and information, e.g., including operation related information, e.g., registration request, AAA services, DHCP requests, Simple Notification Service (SNS) look-ups, and Web page requests via receiver 520, and send data and information, e.g., including configuration information, authentication information, web page data, etc. via transmitter 522.

In examples where network node 500 comprises a wired network device, network node 500 may be connected via wired interface 502 to one or more APs or other wired client-side devices, e.g., IoT devices. For example, network node 500 may include multiple wired interfaces 502 and/or wired interface 502 may include multiple physical ports to connect to multiple APs or the other wired-client-side devices within a site via respective Ethernet cables. In some examples, each of the APs or other wired client-side devices connected to network node 500 may access the wired network via wired interface 502 of network node 500. In some examples, one or more of the APs or other wired client-side devices connected to network node 500 may each draw power from network node 500 via the respective Ethernet cable and a Power over Ethernet (PoE) port of wired interface 502.

In examples where network node 500 comprises a session-based router that employs a stateful, session-based routing scheme, network node 500 may be configured to independently perform path selection and traffic engineering. The use of session-based routing may enable network node 500 to eschew the use of a centralized controller, such as an SDN controller, to perform path selection and traffic engineering, and eschew the use of tunnels. In some examples, network node 500 may implement session-based routing as Secure Vector Routing (SVR), provided by Juniper Networks, Inc. In the case where network node 500 comprises a session-based router operating as a network gateway for a site of an enterprise network (e.g., router 187A of FIG. 1B), network node 500 may establish multiple peer paths (e.g., logical path 189 of FIG. 1B) over an underlying physical WAN (e.g., SD-WAN 177 of FIG. 1B) with one or more other session-based routers operating as network gateways for other sites of the enterprise network (e.g., router 187B of FIG. 1B). Network node 500, operating as a session-based router, may collect data at a peer path level, and report the peer path data to NMS 130.

In examples where network node 500 comprises a packet-based router, network node 500 may employ a packet- or flow-based routing scheme to forward packets according to defined network paths, e.g., established by a centralized controller that performs path selection and traffic engineering. In the case where network node 500 comprises a packet-based router operating as a network gateway for a site of an enterprise network (e.g., router 187A of FIG. 1B), network node 500 may establish multiple tunnels (e.g., logical path 189 of FIG. 1B) over an underlying physical WAN (e.g., SD-WAN 177 of FIG. 1B) with one or more other packet-based routers operating as network gateways for other sites of the enterprise network (e.g., router 187B of FIG. 1B). Network node 500, operating as a packet-based router, may collect data at a tunnel level, and the tunnel data may be retrieved by NMS 130 via an API or an open configuration protocol or the tunnel data may be reported to NMS 130 by NMS agent 544 or other module running on network node 500.

The data collected and reported by network node 500 may include periodically reported data and event-driven data. Network node 500 is configured to collect logical path statistics via bidirectional forwarding detection (BFD) probing and data extracted from messages and/or counters at the logical path (e.g., peer path or tunnel) level. In some examples, network node 500 is configured to collect statistics and/or sample other data according to a first periodic interval, e.g., every 3 seconds, every 5 seconds, etc. Network node 500 may store the collected and sampled data as path data, e.g., in a buffer.

In some examples, network node 500 optionally includes an NMS agent 544. NMS agent 544 may periodically create a package of the statistical data according to a second periodic interval, e.g., every 3 minutes. The collected and sampled data periodically reported in the package of statistical data may be referred to herein as "oc-stats." In some examples, the package of statistical data may also include details about clients connected to network node 500 and the associated client sessions. NMS agent 544 may then report the package of statistical data to NMS 130 in the cloud. In other examples, NMS 130 may request, retrieve, or otherwise receive the package of statistical data from network node 500 via an API, an open configuration protocol, or another of communication protocols. The package of statistical data created by NMS agent 544 or another module of network node 500 may include a header identifying network node 500 and the statistics and data samples for each of the logical paths from network node 500. In still other examples, NMS agent 544 reports event data to NMS 130 in the cloud in response to the occurrence of certain events at network node 500 as the events happen. The event-driven data may be referred to herein as "oc-events."

In accordance with the techniques described in this disclosure, network node 500 includes a virtual client function 534 configured to operate substantially similar to virtual client function 144 of FIG. 1A and virtual client function 256 of FIG. 2 and a roaming testing module 548 configured to operate substantially similar to roaming testing function 135 of FIG. 1A and roaming testing module 258 of FIG. 2. For example, virtual client function 534 includes program instructions that, when executed by one or more processors 506, cause network node 500 to simulate the roaming instance, collect data associated with the performance of a roaming instance (illustrated as "roaming data 536" in memory 512), and/or identify issues with the roaming instance via roaming testing module 548.

Network node 500 may provide, or an NMS (e.g., NMS 130 of FIG. 1A) may obtain, roaming data 536, and the NMS may perform an action based on roaming data 536 obtained from network node 500 (and/or roaming data from other APs of the roaming instance), such as generating and sending a notification (e.g., for display on a display device of admin device 111 or as a message to an administrator) indicative of the performance of the roaming instance, and/or an indication of a root cause of the roaming issue, such as an issue with the configuration of the network, configuration of network node 500 or the APs connected to network node 500, or other issue that is causing an issue of the roaming instance, or perform a remedial action to mitigate or resolve issues of the roaming instance, such as configuring operation of network node 500 or restarting network node 500 to address the roaming issue.

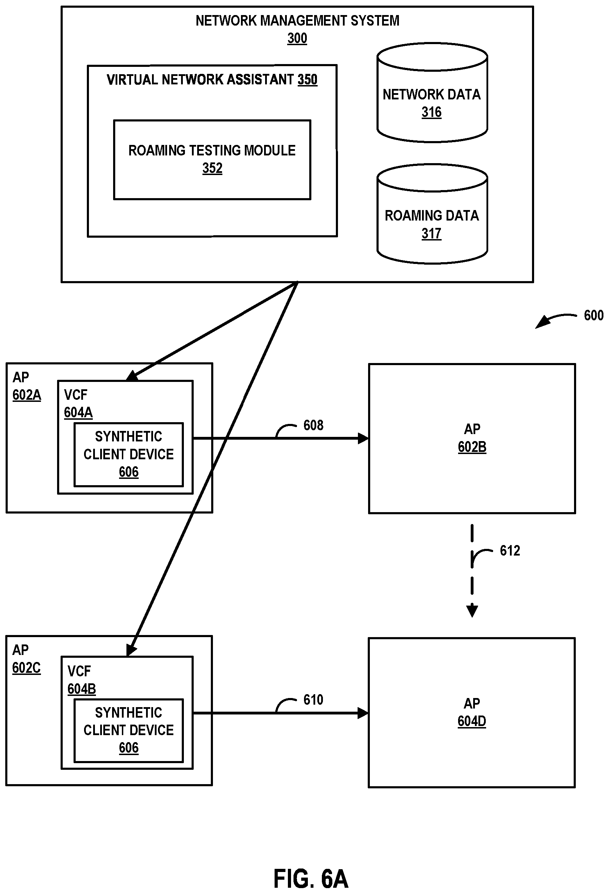

FIG. 6A illustrates an example operation of a roaming test, in accordance with one or more techniques of this disclosure. In the example of FIG. 6A, roaming testing module 352 may generate one or more virtual client functions, e.g., virtual client functions 604A-604B, for execution by one or more devices of a site, e.g., APs 602A and 602C, to simulate roaming instance 600. In other examples, virtual client functions 604A-604B are pre-installed on APs 602A and 602C. In this example, AP 602A may include virtual client function 604A that includes roaming information, such as a MAC address of synthetic client device 606 and a schedule to implement an initial connection 608 to AP 602B representing an initial association to AP 602B at a first time of roaming instance 600. AP 602C may include virtual client function 604B that includes roaming information, such as the MAC address of synthetic client device 606 and a schedule to implement a new connection 610 to AP 602D representing a re-association to AP 602D at a second time (after the first time) of roaming instance 600.

In operation, AP 602A may execute virtual client function 604A, which causes AP 602A to operate as synthetic client device 606 and initiates the initial connection 608 to AP 602B. AP 602B may authenticate synthetic client device 606 via an AAA server (e.g., AAA server 110 of FIG. 1A) and obtain cryptographic information (e.g., public keys, PMKID, etc.) for synthetic client device 606 for roaming instance 600. In some examples, roaming testing module 352 of NMS 300 may provide the cryptographic information for roaming instance 600 (e.g., included in virtual client functions 604A-604B) that would otherwise be obtained from an authentication process with an AAA server.

AP 602A or AP 602B may send the cryptographic information to AP 602C and/or AP 602D (or to a plurality of other APs 142 via multicast) and/or may send the cryptographic information to NMS 300, which in turn sends the cryptographic information to AP 602C and/or AP 602D to enable AP 602C operating as synthetic client device 606 to connect to AP 602D based on the cryptographic information obtained from AP 602A or AP 602B (or from NMS 300), illustrated in FIG. 6A as cryptographic information 612. AP 602C may execute virtual client function 604B and operate as synthetic client device 606 that initiates the new connection 610 to AP 602D based on the cryptographic information obtained from AP 602A or AP 602B (or from NMS 300).

APs 602A-602D may collect roaming data associated with the performance of roaming instance 600, and APs 602A-602D and/or roaming testing module 352 of NMS 300 may determine an issue with roaming instance 600 and/or a root cause of the issue with roaming instance 600 based on the roaming data.

In some examples, AP 602A and AP 602C are configured with a VLAN. In these examples, APs 602A or 602C may, in response to determining that there is an issue in communicating traffic via a VLAN, determine that the process in sharing the cryptographic information has an issue or may provide roaming data including the VLAN configuration information of AP 602A and/or AP 602C to NMS 300 such that roaming testing module 352 of NMS 300 may determine whether the VLAN is configured properly or that the process in sharing the cryptographic information has an issue that caused the issue in sending network traffic via the VLAN.

In some examples, roaming instance 600 may have an issue because one or more of APs 602A-602D are misconfigured. For example, APs 602A-602D may determine, in response to determining that there is an issue in sharing the cryptographic information, whether APs 602A-602D are configured with IEEE 802.11r to enable fast roaming or may provide configuration information of APs 602A-602D to NMS 300 such that roaming testing module 352 of NMS 300 may determine whether APs 602A-602D are configured with IEEE 802.11r to enable fast roaming. As another example, APs 602A-602D may determine, in response to determining that there is an issue in sharing the cryptographic information, whether APs 602A-602D are correctly configured to use multicast in examples where APs 602A-602D use multicast to share cryptographic information or may provide multicast information of APs 602A-602D to NMS 300 such that roaming testing module 352 of NMS 300 may determine whether APs 602A-602D are correctly configured to use multicast to share cryptographic information.

In some examples in which AP 602A or AP 602B is configured to send cryptographic information to NMS 300 to be distributed to AP 602C and/or AP 602D, APs 602A and/or 602B may determine, in response to determining that there is an issue in sharing the cryptographic information, whether AP 602A or AP 602B has a network connectivity issue to NMS 300 e.g., by sending a ping to NMS 300.

In some examples, APs 602A-602D may determine, in response to determining that there is an issue in obtaining or using the cryptographic information, whether there is an issue with the AAA server. For example, APs 602A-602D, or roaming testing module 352 of NMA 300, may determine whether the cryptographic information is no longer valid or whether there is an issue with the connectivity to the AAA server.

In some examples, APs 602A-602D may determine whether there is an issue with the performance of roaming instance 600. For example, APs 602A-602D may compare a time in which the roaming instance is completed with a threshold, and if the threshold is satisfied (e.g., indicating the time to complete the roaming instance is slower than expected), APs 602A-602D may each determine whether any of APs 602A-602D has a capacity issue (e.g., based on a number of connected client devices), whether any of APs 602A-602D is experiencing signal interference, or other reason that may cause a deterioration in performance of roaming instance 600 by APs 602A-602D. In some examples, APs 602A-602D may send network data including the time in which the roaming instance was completed to NMS 300 such that roaming testing module 352 of NMS 300 may determine whether any of APs 602A-602D has a capacity issue or whether any of APs 602A-602D is experiencing signal interference.

In some examples, APs 602A-602D may monitor the performance of network traffic communicated through the network following the re-association to AP 602D. In these examples, AP 602C, operating as synthetic client device 606 may inject packets into the network via AP 602D and monitor the performance of the communication of network traffic. For example, AP 602C may execute a ping or client URL (cURL) command to determine the connectivity to an IP address and/or webpage via AP 602D. AP 602C and/or AP 602D may determine whether there is an issue in the performance of network traffic communicated through the network based on results of the execution of the ping or cURL command or may provide network data including the results of the execution of the ping or cURL command to NMS 300 such that roaming testing module 352 of NMS 300 may determine whether there is an issue in the performance of network traffic communicated through the network.

Based on the roaming data obtained from APs 602A-602D (e.g., roaming data 318), roaming testing module 352 of NMS 300 may generate and send a notification (e.g., for display on a display device of admin device 111 of FIG. 1A or as a message to an administrator) that includes an indication of the performance of roaming instance 600 (e.g., roaming succeeded or failed) and/or an indication of root cause of the roaming instance, such as an issue with the configuration of the network, configuration of any of APs 602A-602D, or other issue that caused an issue to roaming instance 600. In some examples, roaming testing module 352 of NMS 300 may perform a remedial action to mitigate or resolve issues of the roaming instance, such as configuring operation of one or more APs 602A-602D of roaming instance 600 to address the roaming issue or restarting one or more APs 602A-602D of roaming instance 600.

While the example above is described with respect to access points, other devices of a site may execute virtual client functions 604A-604B, such as UE devices, network devices, or other computing devices.

FIG. 6B illustrates another example operation of a roaming test, in accordance with one or more techniques of this disclosure. Roaming instance 620 is similar to roaming instance 600 of FIG. 6A except as described below. In the example of FIG. 6B, rather than an AP operating as the synthetic client device and sending messages over the wireless network to associate or re-associate with a wireless next hop, e.g., another AP (e.g., AP 602A associating with AP 602B and AP 602C re-associating with AP 602D), to simulate a roaming instance, virtual client function 624A of AP 622A may operate as synthetic client device 626 that injects messages locally within AP 622A to a local Wi-Fi driver 628A (e.g., software of wireless interface) of AP 142A-1 to simulate synthetic client device 626 is initiating an initial connection 630 to AP 622A to simulate an association with AP 622A, and virtual client function 624B of AP 622B may operate as synthetic client device 626 that injects messages locally within AP 622B to a local Wi-Fi driver 628B (e.g., software of wireless interface) of AP 622B to simulate synthetic client device 626 is initiating a new connection 632 to AP 622B to simulate a re-association with AP 622B.

In operation, AP 622A may execute virtual client function 624A, which causes AP 622A to operate as synthetic client device 626 and initiates the initial connection 630 to AP 622A. AP 622A may authenticate synthetic client device 626 via an AAA server (e.g., AAA server 110 of FIG. 1A) and obtain cryptographic information (e.g., public keys, PMKID, etc.) for synthetic client device 626 for roaming instance 620. In some examples, roaming testing module 352 of NMS 300 may provide the cryptographic information for roaming instance 620 (e.g., included in virtual client functions 624A-624B) that would otherwise be obtained from an authentication process with an AAA server.

AP 622A may send the cryptographic information to AP 622B or to a plurality of other APs 142 via multicast) and/or may send the cryptographic information to NMS 300, which in turn sends the cryptographic information to AP 622B to enable synthetic client device 626 to connect to AP 622B based on the cryptographic information obtained from AP 622A (or from NMS 300). AP 622B may execute virtual client function 624B and operate as synthetic client device 626 that initiates the new connection 632 to AP 622B based on the cryptographic information obtained from AP 622A (or from NMS 300), illustrated in FIG. 6B as cryptographic information 634.

APs 622A-622B may collect roaming data associated with the performance of roaming instance 620, and APs 622A-622B and/or roaming testing module 352 of NMS 300 may determine the performance of roaming instance 620, such as determining whether there is an issue with roaming instance 620 and/or a root cause of roaming instance 620 based on the roaming data similarly as described above with respect to FIG. 6A.

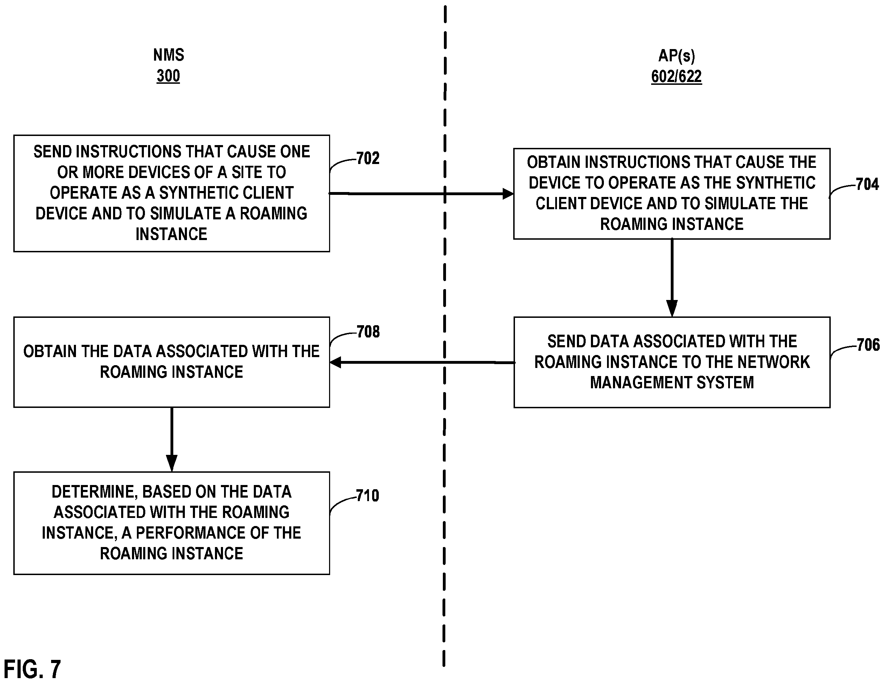

FIG. 7 is a flow chart illustrating an example operation of performing roaming tests for sites, in accordance with one or more techniques of this disclosure. FIG. 7 is described with respect to NMS 130 of FIGS. 1A and 1B, and roaming testing module 352 of NMS 300 of FIGS. 3A, 3B, 6A and/or 6B.

NMS 300 may send instructions that cause one or more devices of a site, e.g., AP 602/622 in FIGS. 6A/6B, to operate as a synthetic client device and to simulate a roaming instance (702). For example, NMS 300 may generate one or more virtual client functions to be executed by one or more APs 602/622 that includes information associated with the roaming instance, such as an identifier of the synthetic client device (e.g., MAC address), a schedule to invoke the roaming instance, and/or other information to simulate the roaming instance. In some examples, the information associated with the roaming instance may further include cryptographic information for the roaming instance.

AP(s) 602/622 may obtain the instructions from NMS 300, such as virtual client functions, that when executed cause AP(s) 602/622 to operate as the synthetic client device and to simulate the roaming instance (704). For example, a virtual client function of a first device (e.g., VCF 604A/624A in FIGS. 6A/6B) may include a schedule for the first device, operating as the synthetic client device at a first time of the roaming instance, to initiate a connection (e.g., initial connection 608/628 in FIGS. 6A/6B) to a first AP (e.g., an initial AP such as AP 602B in FIG. 6A or AP 622A in FIG. 6B) to simulate an initial authentication and association with the initial AP, and a virtual client function of a second device (e.g., VCF 604B/624B in FIGS. 6A/6B) may include a schedule for the second device, operating as the synthetic client device at a second time of the roaming instance, to initiate a connection (e.g., new connection 610/632 in FIGS. 6A/6B) to a second AP (e.g., AP 602D/622B in FIGS. 6A/6B) to simulate re-association with the second AP. For example, the first device may obtain, based on a connection to the first AP, cryptographic information for the roaming instance, and send the cryptographic information for the roaming instance to the second device operating as the synthetic client device at the second time of the roaming instance. The second device operating as the synthetic client device may receive, from the first device operating as the synthetic client device, the cryptographic information for the routing instance and establish a connection to the second access point based on the cryptographic information for the roaming instance.

AP(s) 602/622 may collect data associated with the roaming instance and send the data to NMS 300 (706). NMS 300 may obtain the data associated with the roaming instance (708) and determine, based on the data associated with the roaming instance, a performance of the roaming instance (710). For example, NMS 300 may determine whether the roaming instance has an issue and/or deterioration in performance or if the roaming instance is functioning properly. In some examples, NMS 300 may determine whether any of AP(s) 602/622 and/or AAA server 110 has an issue with a process to authenticate a user and/or client device of the user, such as determining whether the process in authenticating user credentials has an issue or is functioning properly. In some examples, NMS 300 may determine whether there is an issue with a process to authorize the user and/or client device of the user, such as determining whether the policies used to authorize the user and/or client device of the user is properly configured. In some examples, NMS 300 may determine whether there is an issue with the process to obtain cryptographic information by any of AP(s) 602/622 from a AAA server 110 of the roaming instance and/or to share cryptographic information among the AP(s) 602/622 to enable the roaming instance. In some examples, NMS 300 may determine whether there is an issue with the network connectivity of AP(s) 602/622 and management systems, such as the network connectivity between AP(s) 602/622 and NMS 300.

In some examples, NMS 300 may determine a root cause of the issue in sharing the cryptographic information of the roaming instance, such as determining whether multicast is not enabled to share cryptographic information (or other communication protocol to share cryptographic information), and/or issues with other means for sharing the cryptographic information. NMS 300 may additionally, or alternatively, determine the root cause of an issue in obtaining the cryptographic information of the roaming instance, such as determining whether incorrect and/or outdated cryptographic information is obtained from the AAA server, etc. NMS 300 may additionally, or alternatively, determine that the configuration of AP(s) 602/622 is the root cause of an issue to performing the roaming instance, such as determining whether 802.11r is enabled in AP(s) 602/622. NMS 300 may additionally, or alternatively, determine whether network traffic is properly communicated after the synthetic client device has re-associated with a different AP, such as determining whether network traffic communicated via a VLAN has an issue or is functioning properly, whether connectivity to an IP address and/or webpage has an issue or is functioning properly. While the examples described above are described with respect to NMS 300, in other examples, AP(s) 602/622 may determine the performance of the roaming instance.

NMS 300 may generate and send a notification (e.g., for display on a display device of an admin device (e.g., admin device 111 in FIG. 1A) or as a message to an administrator that includes an indication of the performance of the roaming instance (e.g., roaming succeeded or failed) and/or an indication of root cause of the roaming instance, such as an issue with the configuration of the network, configuration of the APs, or other issue that caused an issue to the roaming instance. In some examples, NMS 300 may perform a remedial action to mitigate or resolve issues of the roaming instance, such as configuring operation of one or more APs of the roaming instance to address the roaming issue or restarting one or more APs of the roaming instance.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache). In some examples, the methods described herein may also be embodied or encoded in a transitory computer-readable medium such as signals, carrier waves, or other transient signal-conveying media.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Further examples of the present disclosure are set out in the following numbered clauses:
1. A device comprising:
   a memory; and
   one or more processors in communication with the memory and configured to:
      obtain instructions that cause the device to operate as a synthetic client device and to simulate a roaming instance; and
      send data associated with the roaming instance to a network management system, wherein the data is indicative of a performance of the roaming instance.
2. The device of clause 1, wherein the device comprises one of a network access server (NAS) device or a client device.
3. The device of clause 1 or clause 2, wherein the instructions comprise an identifier of the synthetic client device and a schedule to implement the roaming instance.
4. The device of clause 2 or clause 3, wherein the instructions further comprise cryptographic information for the roaming instance.
5. The device of any preceding clause, wherein the one or more processors are further configured to:
   determine the performance of the roaming instance,
   wherein sending data associated with the roaming instance to the network management system comprises sending data indicative of the performance of the roaming instance.
6. The device of any preceding clause,
   wherein the device comprises a first device operating as the synthetic client device at a first time of the roaming instance, and
   wherein to simulate the roaming instance, the one or more processors are configured to:
      establish a connection to a first access point;
      obtain, based on the connection to the first access point, cryptographic information for the roaming instance; and
      send the cryptographic information for the roaming instance to a second device operating as the synthetic client device at a second time of the roaming instance and to a second access point to establish a connection between the second device operating as the synthetic client device and the second access point based on the cryptographic information for the roaming instance.
7. The device of any preceding clause,
   wherein the device comprises a second device operating as the synthetic client device, and
   wherein to simulate the roaming instance, the one or more processors are configured to:
      receive, from a first device operating as the synthetic client device, cryptographic information for the routing instance; and
      establish a connection to a second access point based on the cryptographic information for the roaming instance.
8. The device of any preceding clause,
   wherein the device comprises a first device operating as the synthetic client device and a first access point, and
   wherein to simulate the roaming instance, the one or more processors are configured to:
      establish a connection to the first access point based on internal communication to software of a network interface of the first device;
      obtain, based on the connection to the first access point, cryptographic information for the roaming instance; and
      send the cryptographic information for the roaming instance to a second device, operating as the synthetic client device and the second access point, to establish a connection to the second access point based on the cryptographic information for the roaming instance.
9. The device of any preceding clause,
   wherein the device comprises a second device operating as the synthetic client device and a second access point, and
   wherein to simulate the roaming instance, the one or more processors are configured to:
      receive, from a first device operating as the synthetic client device, cryptographic information for the routing instance; and
      establish, based on internal communication to software of a network interface of the second device, a connection to the second access point based on the cryptographic information for the roaming instance.
10. A network management system comprising:
   a memory; and
   one or more processors in communication with the memory and configured to:
      send instructions that cause a device of a site to operate as a synthetic client device and to simulate a roaming instance;
      obtain data associated with the roaming instance; and
      determine, based on the data associated with the roaming instance, a performance of the roaming instance.
11. The network management system of clause 10, wherein the device comprises one of a network access server (NAS) device or a client device.
12. The network management system of clause 10 or clause 11, wherein the instructions comprise an identifier of the synthetic client device and a schedule to implement the roaming instance.
13. The network management system of clause 12, wherein the instructions further comprise cryptographic information for the roaming instance.
14. The network management system of any of clauses 10-13, wherein the one or more processors are further configured to:
   perform an action based on identifying an issue with the roaming instance.
15. The network management system of clause 14, wherein to perform the action, the one or more processors are configured to perform one of:
   generate a notification indicating the issue with the roaming instance; or
   configure the device of the site to remedy the issue with the roaming instance.
16. The network management system of any of clauses 10-15, wherein to determine the performance of the roaming instance, the one or more processors are configured to one or more of:
   determine whether there is an issue in obtaining cryptographic information for the roaming instance;
   determine whether there is an issue in sharing cryptographic information for the roaming instance;
   determine whether there is an issue with configuration of one or more devices associated with the roaming instance;
   determine whether there is an issue with network connectivity of the roaming instance; or
   determine whether there is an issue in communicating network traffic in response to performing the roaming instance.
17. The network management system of any of clauses 10-16,
   wherein the device comprises a first device operating as the synthetic client device, and
   wherein the instructions cause the first device operating as the synthetic client device to:
      establish a connection to a first access point;
      obtain cryptographic information for the roaming instance; and
      send the cryptographic information for the roaming device to a second device, operating as the synthetic client device, to establish a connection to a second access point based on the cryptographic information.
18. The network management system of any of clauses 10-17,
   wherein the device comprises a second device operating as the synthetic client device, and
   wherein the instructions cause the second device operating as the synthetic client device to:
      receive, from a first device, operating as the synthetic client device, cryptographic information for the routing instance; and
      establish a connection to a second access point based on the cryptographic information for the roaming instance.
19. The network management system of any of clauses 10-18,
   wherein the device comprises a first device operating as the synthetic client device and a first access point, and
   wherein the instructions cause the first device operating as the synthetic client device to:
      establish a connection to the first access point based on internal communication to software of a network interface of the first device;
      obtain, based on the connection to the first access point, cryptographic information for the roaming instance; and
      send the cryptographic information for the roaming instance to a second device, operating as the synthetic client device and a second access point, to establish a connection to the second access point based on the cryptographic information for the roaming instance.
20. Non-transitory computer-readable storage media comprising instructions that, when executed, cause one or more processors to:
   obtain instructions that cause a device of a site to operate as a synthetic client device and to simulate a roaming instance; and
   send data associated with the roaming instance to a network management system, wherein the data is indicative of a performance of the roaming instance.

Thus, from one perspective, there has now been described network device testing with virtual client functions. The disclosure describes one or more techniques for performing roaming tests for sites. For example, a device comprises a memory and one or more processors in communication with the memory and configured to obtain instructions that cause a device of a site to operate as a synthetic client device and to simulate a roaming instance; and send data associated with the roaming instance to a network management system, wherein the data is indicative of a performance of the roaming instance.

## Claims

1. A device comprising:
a memory; and
one or more processors in communication with the memory and configured to:
obtain instructions that cause the device to operate as a synthetic client device and to simulate a roaming instance; and
send data associated with the roaming instance to a network management system,
wherein the data is indicative of a performance of the roaming instance.

2. The device of claim 1, wherein the device comprises one of a network access server device or a client device.

3. The device of any of claims 1-2, wherein the instructions comprise an identifier of the synthetic client device and a schedule to implement the roaming instance.

4. The device of claim 3, wherein the instructions further comprise cryptographic information for the roaming instance.

5. The device of any of claims 1-4, wherein the one or more processors are further configured to:
determine the performance of the roaming instance,
wherein sending data associated with the roaming instance to the network management system comprises sending data indicative of the performance of the roaming instance.

6. The device of any of claims 1-5,
wherein the device comprises a first device operating as the synthetic client device at a first time of the roaming instance, and
wherein to simulate the roaming instance, the one or more processors are configured to:
establish a connection to a first access point;
obtain, based on the connection to the first access point, cryptographic information for the roaming instance; and
send the cryptographic information for the roaming instance to a second device operating as the synthetic client device at a second time of the roaming instance and to a second access point to establish a connection between the second device operating as the synthetic client device and the second access point based on the cryptographic information for the roaming instance.

7. The device of any of claims 1-6,
wherein the device comprises a second device operating as the synthetic client device, and
wherein to simulate the roaming instance, the one or more processors are configured to:
receive, from a first device operating as the synthetic client device, cryptographic information for the routing instance; and
establish a connection to a second access point based on the cryptographic information for the roaming instance.

8. The device of any of claims 1-7,
wherein the device comprises a first device operating as the synthetic client device and a first access point, and
wherein to simulate the roaming instance, the one or more processors are configured to:
establish a connection to the first access point based on internal communication to software of a network interface of the first device;
obtain, based on the connection to the first access point, cryptographic information for the roaming instance; and
send the cryptographic information for the roaming instance to a second device, operating as the synthetic client device and the second access point, to establish a connection to the second access point based on the cryptographic information for the roaming instance.

9. The device of any of claims 1-8,
wherein the device comprises a second device operating as the synthetic client device and a second access point, and
wherein to simulate the roaming instance, the one or more processors are configured to:
receive, from a first device operating as the synthetic client device, cryptographic information for the routing instance; and
establish, based on internal communication to software of a network interface of the second device, a connection to the second access point based on the cryptographic information for the roaming instance.

10. A network management system comprising:
a memory; and
one or more processors in communication with the memory and configured to:
send instructions that cause a device of a site to operate as a synthetic client device and to simulate a roaming instance;
obtain data associated with the roaming instance; and
determine, based on the data associated with the roaming instance, a performance of the roaming instance.

11. The network management system of claim 10, wherein to determine the performance of the roaming instance, the one or more processors are configured to perform one or more of:
determine whether there is an issue in obtaining cryptographic information for the roaming instance;
determine whether there is an issue in sharing cryptographic information for the roaming instance;
determine whether there is an issue with configuration of one or more devices associated with the roaming instance;
determine whether there is an issue with network connectivity of the roaming instance; or
determine whether there is an issue in communicating network traffic in response to performing the roaming instance.

12. The network management system of claim 10 or claim 11,
wherein the device comprises a first device operating as the synthetic client device, and
wherein the instructions cause the first device operating as the synthetic client device to:
establish a connection to a first access point;
obtain cryptographic information for the roaming instance; and
send the cryptographic information for the roaming device to a second device, operating as the synthetic client device, to establish a connection to a second access point based on the cryptographic information.

13. The network management system of any of claims 10-12,
wherein the device comprises a second device operating as the synthetic client device, and
wherein the instructions cause the second device operating as the synthetic client device to:
receive, from a first device, operating as the synthetic client device, cryptographic information for the routing instance; and
establish a connection to a second access point based on the cryptographic information for the roaming instance.

14. The network management system of any of claims 10-13,
wherein the device comprises a first device operating as the synthetic client device and a first access point, and
wherein the instructions cause the first device operating as the synthetic client device to:
establish a connection to the first access point based on internal communication to software of a network interface of the first device;
obtain, based on the connection to the first access point, cryptographic information for the roaming instance; and
send the cryptographic information for the roaming instance to a second device, operating as the synthetic client device and a second access point, to establish a connection to the second access point based on the cryptographic information for the roaming instance.

15. Computer-readable media comprising instructions that, when executed, cause one or more processors to become configured as the device of any of claims 1-9 or the network management system of any of claims 10-14.
